# EUROPEAN PATENT APPLICATION

(11) **EP 3 978 945 A2**
(43) Date of publication of application: **06.04.2022**
(21) Application number: 21192179.6
(22) Date of filing: 19.08.2021
(51) Int. Cl.: G01S 5/00, G06Q 10/08, H04W 4/029, B60P 3/40, F03D 13/40

(54) **A TRACKING DEVICE, A SYSTEM, A METHOD FOR SENDING POSITION DATA BY A TRACKING DEVICE AND A COMPUTER-READABLE MEDIUM**

(30) Priority: 01.10.2020 EP 20199580; 29.04.2021 EP 21171162
(71) Applicant: Polytech A/S, 6740 Bramming (DK)
(72) Inventor: Børsting, Kristian, 6705 Esbjerg (DK); Raith, Maximilian, 83607 Holzkirchen (DE)
(74) Representative: Kilchert, Jochen

(57) **Abstract**

The transport of wind turbine equipment using transport carriers needs to be tracked using tracking devices. This transport is not sufficiently solved and problems exists in particular due to the transport requirements of energy sources.

These problems are overcome by a tracking device (1), comprising:
- a position detection unit (10) adapted to provide position data (20) indicating a current position of the tracking device (1);
- a communication unit (11) adapted to communicate with a wireless communication network;
- a control unit (12) adapted to receive the position data (20) and adapted to send the position data (20) via the communication unit (11);
- an energy source (13) electrically coupled with the position detection unit (10) and the control unit (12);
wherein
the energy source (13) is removably arranged in the tracking device (1).

## Description

The present invention concerns a tracking device, a system, a method for sending position data by a tracking device and a computer-readable medium.

Manufacturers of wind turbines and other manufacturers of heavy equipment are transporting elements and goods to locations worldwide. When transporting heavy elements and components such as for instance towers, blades and nacelles, expensive and special carriers and other transport equipment are needed for protecting the elements and components during the transport. When the elements and components are installed on site, the carriers are often left at the location, and the manufacturers do not always have a full understanding of future transportation needs. As a result, the carriers are left, forgotten, and eventually discarded.

The consequence may be that new expensive special carriers have to be ordered and produced to new transportation sites. This is very costly, and not environmentally friendly.

It is known in the art to use specialized tracking devices in order to keep track of such carrier equipment. For instance, GPS trackers may be installed on the carrier that continuously provide location data to the manufacturer. Based on this information, the manufacturer can retrieve the carrier once it is not used anymore.

As stated above, such GPS trackers are often installed on the carriers and thereby exposed to environmental conditions, like rain or dust. Consequently, these devices have to be rigid, i.e. water and/or dust proof.

To standardize the requirements that equipment needs to fulfil, the International Electrotechnical Commission (IEC) has developed a variety of different International Protection Codes (IP codes), which classifies and rates the degree of protection provided by mechanical castings and electrical enclosures against intrusion, dust, accidental contact, and water. One of these standards is IEC 60529. A European equivalent is EN 60529.

One measure used in the art to fulfil the requirements laid out by the above-mentioned standards is to fully seal the enclosures of a GPS tracker and even fill the inside with some form of resin, for example epoxy resin. In consequence, the electrical parts of a GPS tracker are fully sealed from environmental conditions. This includes the battery used to power the GPS tracker.

As the main function of the GPS tracker is to follow a piece of equipment during transport, it is important that the GPS tracker can always perform its purpose. This purpose is restricted by requirements in the transport of electrical goods, in particular batteries. For example, it is well known that larger lithium ion batteries must not be carried on an airplane. This is due to the high energy density and the risk of a fire in case the battery is damaged and thus becomes unstable. Further requirements exist for the transport of respective batteries, for example, on ships.

In consequence, in order to meet the requirements of shipping regulations with respect to batteries and the requirements regarding the protection against environmental conditions, the GPS trackers have to be uninstalled during transport.

A further drawback of the state of the art GPS trackers is that once the installed battery is depleted, the device needs to be disposed of. Alternatively, inductive charging could be considered but this is costly and further complicates the design of such GPS trackers.

It is therefore an object of the present invention to remedy the disadvantages in the art of tracking devices. It is in particular an object of the invention to allow the shipping of tracking devices. It is a further object of the invention to enable the placement on shipping devices on carrier equipment during the entire delivery process. Specifically, it is an object of the invention to improve carrier of wind turbines and respective equipment of wind turbines. It is a further in particular an object of the invention to enable a prolonged operation of a tracking device.

The object of the invention is solved by the subject matter according to the independent claims.

In particular, the object is solved by a tracking device, in particular a portable tracking device, in particular for tracking carrier equipment, preferably of wind turbine equipment, such as blades, nacelles, towers or parts of towers, comprising:
- a position detection unit adapted to provide position data indicating a current position of the tracking device;
- a communication unit adapted to communicate with a wireless communication network;
- a control unit adapted to receive the position data and adapted to send the position data via the communication unit;
- an energy source electrically coupled with the position detection unit and the control unit;
wherein the energy source is removably arranged in the tracking device.

It is an idea of the present invention to enable the removal of an energy source. In case the energy source is configured as an interchangeable energy source, it is possible to change the energy source during transport. For example, during regular operation an energy source is installed which is of higher lithium content and thus provides a big power supply, whereas during transport, the energy source is replaced by an energy source with a low lithium content, preferably less in 2 grams. In this way, it is always possible to find a best fit of an energy source for a use case. Moreover, having a removable energy source enables the long-term operation of the tracking device as the energy source can be exchanged once it is depleted or near depleted.

In one embodiment, the energy source may be configured as a rechargeable battery, in particular as a lithium metal-based battery or as a lithium ion accumulator. For example, the energy source may have an input voltage of greater or equal than 3V, a peak current or greater or equal than 20mA and/or is temperature compliant in the range of -40°C to +85°C. Such an aforementioned energy source may in particular be used during transport of the tracking device. For battery powered tracking devices, the energy density may be at least 650wh/Kg.

In one beneficial embodiment, the energy source may be a rechargeable battery, such that after the energy source is depleted, it can be recharged and operation of the tracking device can continue.

In one embodiment, the tracking device may comprise a dust and/or waterproof case, in particular rated according to IP6X,IPX7, IPX8, such as IP67 or IP68, wherein the position detection unit, the communication unit, the control unit, the energy source and/or the supercapacitor unit may be arranged inside the case. This disclosure is intended to cover all possible ratings, e.g. IP61 to IP69.

An IP6X refers to a standardised rating such that no dust can enter the case. An IPX7 rating refers to a standardised rating such that no water will enter the case if the case is drowned up to 1 m in freshwater. Moreover, an IPX8 rating refers to a standardised rating such that no water will enter the case if it is drowned in more than 1 m in freshwater. Thus, the case may protect all components of the tracking device during use from dust and/or water.

In one embodiment, a/the case may comprise a battery compartment, wherein the battery compartment may include a lid, wherein the lid is configured to seal the battery compartment when closed.

The energy source may be stored in a battery compartment that might be arranged inside the case. Using such a battery compartment it is possible to design specific enclosures which satisfy the requirements regarding dust and/or water intrusion.

In one embodiment, the lid may comprise a slit or handle such that the lid can be removed with our without at least one tool when attached to the battery compartment.

In one embodiment, an o-ring may be used to seal the battery compartment, in particular the lid of the battery compartment when the lid is closed.

Moreover, in one embodiment a/the battery compartment may be spring-loaded and may comprise a thread, wherein the lid may be adapted to be screwed into the thread such that an o-ring arranged at the lid seals the battery compartment.

With the above-mentioned embodiment, a very simple and cost-effective design of a battery compartment is provided, which seals the battery compartment from water and/or dust.

In one embodiment, the tracking device may comprise a supercapacitor unit adapted to power the communication unit, wherein the control unit may be adapted to route energy from the energy source to the supercapacitor for charging the supercapacitor.

It is an idea of the embodiment to use a supercapacitor unit for powering the communication unit. Communication with the wireless communication network usually requires high currents in order to establish a connection to the network. As a result, it is not feasible to maintain a connection over a prolonged period of time using a portable energy source. Furthermore, providing an energy source suitable for powering the communication unit violates transportation rules of batteries. Consequently, the supercapacitor unit may be used to power the communication unit only during a time at which position data is sent to the wireless communication network. For this, the control unit may be adapted to route energy from the energy source to the supercapacitor. Routing energy from the energy source to the supercapacitor may in one embodiment refer to sending a control signal to the energy source and/or the communication unit such that the energy source provides energy to the communication unit. In this way, it is possible to use an energy source, which does not violate transportation requirements and also allows data transmission during short connections to the wireless communication network.

In addition, the embodiment decouples the functioning of the communication unit from the energy source. As a result, it is possible to use a low voltage, i.e. low power, energy source while still being able to provide a high voltage, i.e. high power to the communication unit in order to communicate with the wireless communication network. As a further result, it is possible to change the energy source without having to adapt the communication unit.

In one embodiment, the position detection unit is configured as a receiver for a global navigation satellite system (GNSS), such as GPS ,GLONASS, BDS and/or Galileo. Of course, it is also feasible that the position detection unit is configured to act as a receiver for any combination of the aforementioned global navigation satellite systems. A receiver for a global navigation satellite system may be adapted to measure a running time of at least 3 satellite signals to the position detection unit. The position detection unit may be adapted to compute a longitude, latitude and/or height of the position detection unit and hence of the tracking device.

The communication unit may be configured as a GSM, UMTS, LTE, and/or 5G communication module. As such, the communication unit may be adapted to communicate with one or more different wireless communication networks.

The control unit may be configured as a processing board, comprising at least one processor, memory and/or communication interfaces. Instructions to implement the functions defined for the control unit may be stored in memory and read and implemented by the at least one processor. Thus, the control unit may be communicatively coupled with the communication unit as well as the position detection unit using the communication interfaces. Furthermore, the control unit may be powered by the energy source.

In one embodiment, the control unit may be adapted to charge the supercapacitor at predefined time intervals and/or to send position data at predefined time intervals, preferably once per day, once per week, once per hour, once per minute and/or once per second.

In one preferred embodiment, it is thus possible to send position data at predefined time intervals. The time interval may be configured by a customer and may be dependent on the concrete application scenario. In any case, using a predefined time interval, it is possible to define an uptime of the tracking device. This is possible as the maximum amount of energy stored by the energy source and the required energy to power the tracking device are known to the manufacturer. Consequently, the maximum uptime of the tracking device is heavily dependent on the number of times the position data is sent to the wireless communication network. Choosing a low frequency, e.g. once per week, may prolong the uptime considerably compared to an hourly transmission.

In one embodiment, the predefined time interval may be dependent on a battery status, wherein the battery status is determined by the control unit. For example, the control unit may be adapted to measure the remaining energy stored in the energy source. If the remaining energy stored in the energy source falls below a critical energy level, the control unit may be adapted to adapt the predefined time interval, for example increase the time between transmissions in order to prolong the uptime of the tracking device.

With the above-mentioned embodiment, it is possible to maximise the uptime of the tracking device and henceforth making it possible for an operator of the tracking device to locate the tracking device in order to switch/replace the energy source.

In one embodiment, the control unit may further be adapted to receive configuration data, in particular via the communication unit after charging the supercapacitor unit, wherein the control unit may be adapted to process the configuration data, wherein the configuration data may determine a/the time interval to charge the supercapacitor and/or to send position data.

The communication unit can therefore not only be used to send position data but also to receive data, for example configuration data. Using the GSM wireless communication network, the configuration data may be received as a SMS of the GSM standard (Short message service). The control unit may be adapted to process the received SMS and extract configuration information according to which the control unit adapts its functioning. This is useful in case the operator of the tracking device wishes to change parameters of the functioning of the tracking device, for example the frequency with which the tracking device sends position data. Moreover, the configuration data may include a firmware update such that the control unit may update its entire firmware.

The above embodiment therefore provides a very efficient and convenient means to change the configuration and/or the firmware of the tracking device.

In one embodiment, the communication unit is electrically coupled to the supercapacitor unit, wherein the supercapacitor unit is adapted to provide energy to the communication unit only during sending of the position data and/or during receiving of configuration data.

In one embodiment, the control unit may be adapted to measure a voltage draw of the supercapacitor unit during a charge period and further adapted to compare the voltage draw with a threshold value to determine if the supercapacitor unit is charged, wherein the supercapacitor unit may be determined to be charged if the voltage draw is lower and/or equal to the threshold value.

In order to determine whether the supercapacitor is fully charged, the control unit may use a threshold value, which is preferably user-defined or indicated by configuration data. Thus, the above embodiment provides an efficient implementation of the determination of the charge level of the supercapacitor, i.e. when to stop the charging process. In order to achieve this, the control unit may measure a voltage draw of the supercapacitor, e.g. using a measuring device such as a multimeter.

In one embodiment, the supercapacitor unit may be configured to provide a higher rate of energy transfer during a discharge period, in particular power, preferably measured in Watt, than the energy source.

The supercapacitor unit may be designed to deliver high currents during a short period of time, e.g. less than 20 seconds, less than 10 seconds, less than 5 seconds or less than 2 seconds. In this way, the energy source may be designed such that the total uptime is maximised without having to consider energy needs of the communication unit.

In one embodiment, the supercapacitor unit may be configured to store an amount of energy sufficient for the communication unit to establish a connection with a wireless communication network, such as GSM, and to send the position data and/or to receive configuration data.

Thus, in this embodiment the amount of energy remaining in the supercapacitor unit after sending the position data to the wireless communication network is low. This prolongs the total uptime of the tracking device as a supercapacitor unit does have parasitic energy draws such that the remaining energy will dissipate. As a result, in the event that the remaining energy in the supercapacitor unit after the sending of the position data is minimised, the uptime is maximised.

The object of the present invention is furthermore solved in particular by a system comprising:
- at least one carrier equipment for the transport of wind turbine equipment;
- a tracking device, in particular according to any of the preceding embodiments, wherein the tracking device is mounted on the at least one carrier equipment.

In order to track carrier equipment, the tracking device may be mounted directly on the at least one carrier equipment. For example, the tracking device may comprise a magnetic unit which is attachable to the at least one carrier equipment. Alternatively or in addition it is conceivable that the tracking device may be glued or screwed onto the at least one carrier equipment.

In one embodiment, the system may comprise wind turbine equipment, in particular at least one blade and/or at least one nacelle, wherein the wind turbine equipment may be mounted on the at least one carrier equipment.

The object is further in particular solved by method, in particular a computer-implemented method, for sending position data by a tracking device, in particular a tracking device according to any of preceding embodiments, the method comprising:
- Receiving position data indicating a current position of a tracking device;
- Charging a/the supercapacitor unit with electric energy;
- Sending the position data to a wireless network using a communication unit, wherein the communication unit is powered by the supercapacitor unit.

In one embodiment, the method may comprise charging the supercapacitor unit at predefined time intervals and/or sending the position data at predefined time intervals, preferably once per day, once per week, once per hour, once per minute and/or once per second.

In one embodiment, the method may further comprise receiving configuration data, preferably by the communication unit, in particular via a communication unit after charging the supercapacitor unit, wherein the method may further comprise processing the configuration data, wherein the configuration data may determine a/the time interval to charge the supercapacitor and/or to send position data.

In one embodiment, the method may further comprise providing energy to the communication unit only during sending of the position data and/or during receiving of configuration data.

In one embodiment, the method may further comprise measuring a voltage draw of the supercapacitor unit during a charge period and the method may further comprise comparing the current voltage draw with a threshold value as well as determining if the super capacitor unit is charged by comparing whether the current voltage drawer is lower and/or equal to the threshold value.

The object of the present invention is further in particular solved by a computer-readable medium storing instructions that when executed by at least one processor cause the at least one processor to implement any of the aforementioned methods.

Identical or similar advantages as described with respect to the tracking device are present with respect to the method, the system and the computer readable medium.

It is noted that in the context of the present disclosure, a "unit" may refer to a single piece of equipment, e.g. a device, or to a plurality of equipment, for example a plurality of devices, acting in conjunction to fulfil the functions of the "unit". Thus, for example, the control unit may comprise a processor, memory and other equipment required to fulfil the functions of the control unit. A communication unit may comprise an antenna as well as processing equipment and respective communication interfaces in order to receive position data, process it and send it to the wireless communication network.

Further embodiments are indicated by the dependent claims.In the following, embodiments of the invention are described with respect to the figures, wherein the figures show
- Figure 1a:: the tracking device in a three-dimensional rendering;
- Figure 1b:: a lid for the tracking device;
- Figure 2:: a schematic overview of the components of the tracking device;
- Figure 3:: a diagram showing the charging and de-charging of the supercapacitor;
- Figure 4:: a diagram showing how data can be transmitted in regular intervals;
- Figure 5:: a flow-chart of a method for sending position data;
- Figure 6a:: perspective view on a carrier equipment with a tracking device;
- Figure 6b:: view on carrier equipment with a tracking device and wind turbine equipment.

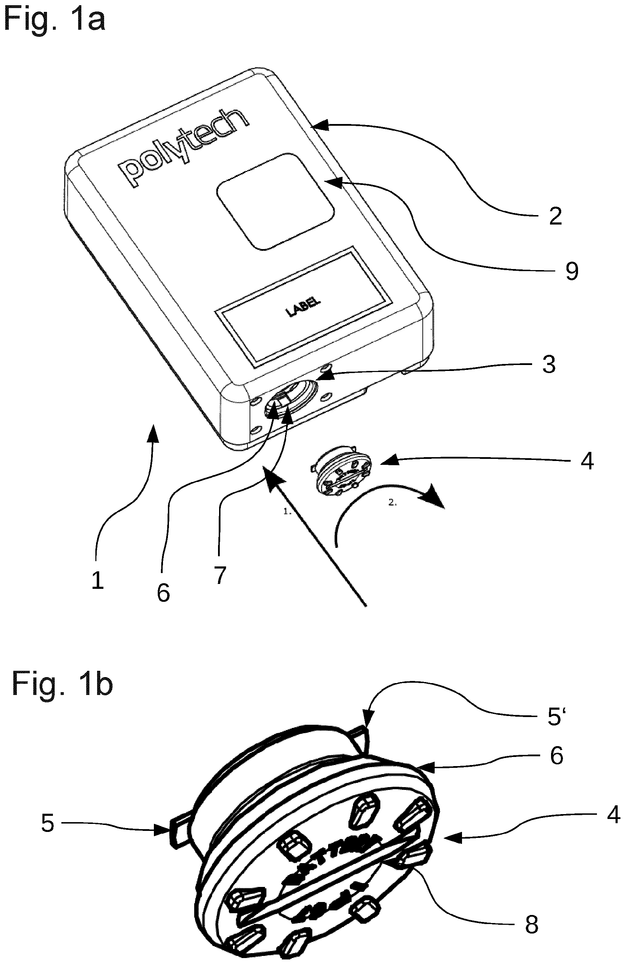

Figures 1a and 1b show a tracking device 1. The tracking device 1 comprises a case 2, which houses the various components of the tracking device 1. The case 2 further comprises a label as well a display 9, which is adapted to show status information of the tracking device 1. For example, the display 9 may be configured to show the status of the energy source of the tracking device 1. The case 2 may be made out of a nonconductive material, such as plastic. Using a nonconductive material for the case 2, it is possible to house an antenna for data transmission within the housing 2. Moreover, nonconductive housings can be produced efficiently and cost effectively. The case 2 further comprises a battery opening of the battery compartment 3 for inserting an energy source into the case 2, e.g. a lithium ion battery. The battery compartment 3 is configured with a round opening, adapted to take batteries of cylindrical shape. The battery compartment 3 is sized such as to fit the inserted batteries.

The battery compartment 3 may be sealed using a removable lid 4, which is shown in detail in figure 1b. The lid 4 has substantially the form of a truncated cone, wherein a small diameter end surface facing the case 2. A large diameter end surface is arranged opposite to the small diameter end surface and is configured to be the outside wall of the lid 4 when installed in the battery compartment 3.

In the shown embodiment, the lid 4 is configured with two engagement teeth 5, 5'. The engagement teeth 5, 5' are arranged opposite from each other at the small diameter end surface. The engagement teeth 5, 5' are arranged to engage behind an inner wall within the battery compartment 3. For this, the battery opening comprises tooth recesses 7, which are configured to lead the engagement teeth 5, 5' through the battery opening. Once the engagement teeth 5, 5' have passed through the battery opening, the lid 4 can be rotated in order to secure the lid 4 within the battery compartment 3.

To ease rotation of the lid 4, the lid 4 comprises a slit 8, so that a coin or a screwdriver can be used to rotate the lid 4. Alternatively, it is conceivable that the lid 4 comprises a handle to support rotation by a human user.

To provide a water and dust proof seal, an O-ring seal 6 is arranged below the large diameter end surface. In rotation or by applying pressure to the lid 4 prior rotation, the O-ring seal 6 is pressed against an inner ceiling wall of the battery compartment 3.

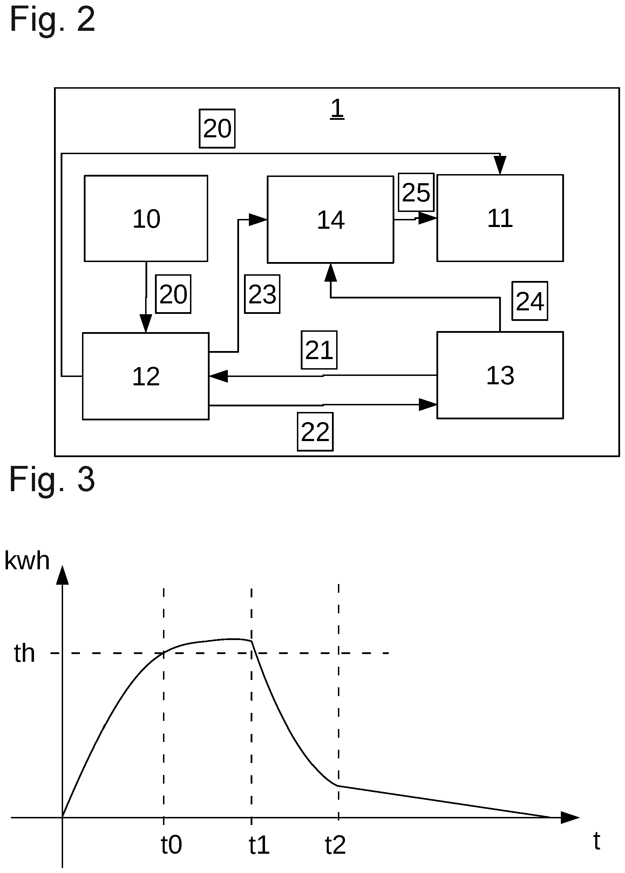

Figure 2 shows a schematic of the components arranged within the tracking device 1. The tracking device 1 comprises a position detection unit 10, a communication unit 11, a control unit 12, an energy source 13 as well as a supercapacitor unit 14. During operation, the position detection unit 10 is adapted to receive or compute position data 20, indicating the current position of the tracking device 1. For example, the position detection unit 10 may be implemented as a GPS sensor. A GPS sensor is adapted to receive satellite signals, in particular from more than 2 satellites indicating a timestamp. Based on the duration of the signal transport from the satellite to the GPS sensor, the GPS sensor can compute an exact location.

The position detection unit 10 provides position data 20 to the control unit 12. The control unit 12 may be implemented as a signal processor, adapted to process data and initiate or output control signals 22, 23. The control unit 12 further comprises a memory, storing programming instructions to execute a predefined program. For example, the control unit 12 may be adapted to send the position data 20 at predefined time intervals to a communication network, for example a wireless communication network such as GSM. For this, the memory may store instructions that implement the steps of comparing a timer with a pre-determined threshold, e.g. implemented as a loop, such that the sending of the control signals 22, 23 is initiated when the timer matches the threshold or when the timer is greater than the threshold. The same functionality can be implemented to measure the current position. Thus, the position data 20 is not received continuously but can be received at specific times, e.g. a specific amount of time prior sending the control signals 22, 23. The control unit 12 is provided with electric energy 21 by the energy source 13. The control unit 12 is adapted to be operated in a stand-by mode between sending intervals. With such an implementation, the required energy consumption of the control unit 12 can be minimized.

Importantly, the control unit 12 may be adapted to send a control signal 22, 23 to the supercapacitor unit 14 and the energy source 13 to charge the supercapacitor 14. A characteristic of supercapacitors is the ability to store a high energy density which allows fast charging and de-charging. Thus, the supercapacitor unit 14 is adapted to provide high output power to the communication unit 11, which is required in order to establish a connection with a mobile communication system, such as GSM, UMTS, LTE or the like. Thus, once the supercapacitor unit 14 is fully charged, which can be measured by the control unit 12 by measuring the voltage draw of the supercapacitor unit 14 at the energy source 13, i.e. by comparing the voltage draw with a threshold value, the supercapacitor unit 14 provides energy 15 to the communication unit 11, which is adapted to establish a connection with the wireless communication network. Once the connection with the wireless communication network is established, the communication unit 11 is adapted to send the position data 20 to a recipient using the wireless communication network. The recipient can be any user of the wireless communication network.

The capacity, i.e. the amount of energy stored, of the supercapacitor unit 14 is configured to allow transmitting the position data 20.

In a further embodiment, the control unit 12 may in addition or alternatively be adapted to initiate the charging of the supercapacitor unit 14 such that the communication unit 11 is powered to receive configuration data. Such configuration data may be read and processed by the control unit 12. For example, the configuration data may indicate the frequency with which the position data 20 is sent to the wireless communication system. Furthermore, it is possible to receive updates of firmware, which refers to the program executed by the control unit 12 and which controls the above-described functions implemented by the control unit 12.

Figure 3 shows a typical charging curve of a supercapacitor unit 14. As is evident from figure 3, the charging of the supercapacitor 14 is done relatively fast until a threshold value th is reached. After the reaching the threshold value th at time t0, the supercapacitor unit 14 is saturated, i.e. the charging slows down. In the shown embodiment, the stored capacity when reaching the threshold value th is sufficient for powering the communication unit 11 to send the position data 20 to the wireless communication network. At time t1, the control unit 12 initiates the sending of the position data 20. Thus, the stored energy drops rapidly until the sending by the communication unit 12 stops at time t2. After time t2, the supercapacitor will lose the remaining energy over an extended period due to energy dissipation.

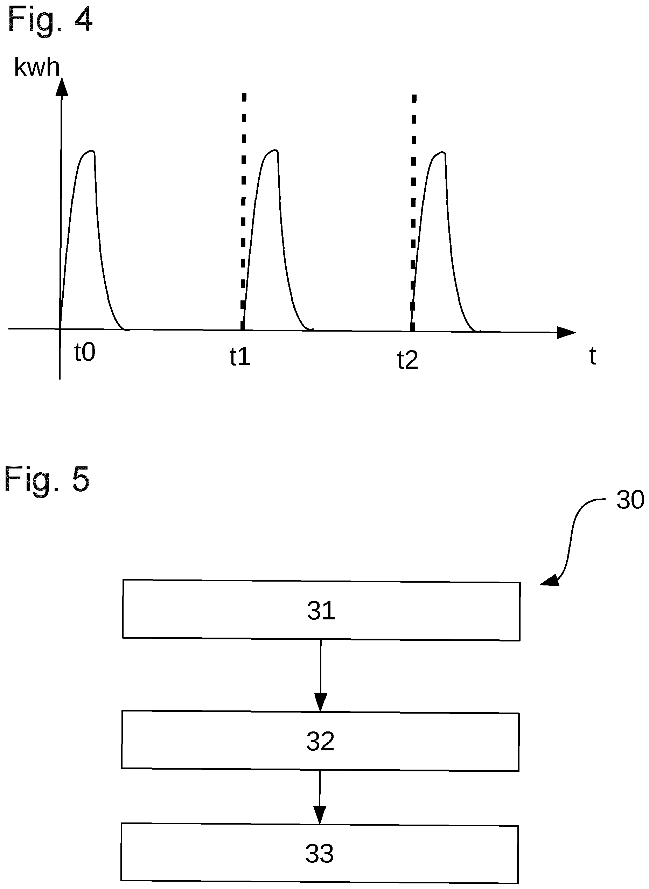

Figure 4 illustrates the repetitive charging and discharging of the supercapacitor unit 14 in predefined intervals. As shown, the control unit 12 is adapted to initiate charging of the supercapacitor unit 14 at times t0, t1, and t2 by the energy source 13 to send position data 20 to the wireless communication network. The time between initiating communication can be user defined and/or received by configuration data.

Figure 5 is a flow-chart exemplifying a method 30 for sending position data 20 to a wireless communication network. In a first receiving step 31, position data 20 is received, for example from the above-mentioned position detection unit 10 and/or the control unit 12. Subsequently, in a charging step 32, a supercapacitor unit 14 is charged with electric energy, in particular from an energy source 13 as described above, wherein the charging is initiated by the control unit 12. Lastly, the position data 20 is sent to a wireless communication network, in particular using a communication unit 11 and initiated by the control unit 12 as mentioned above.

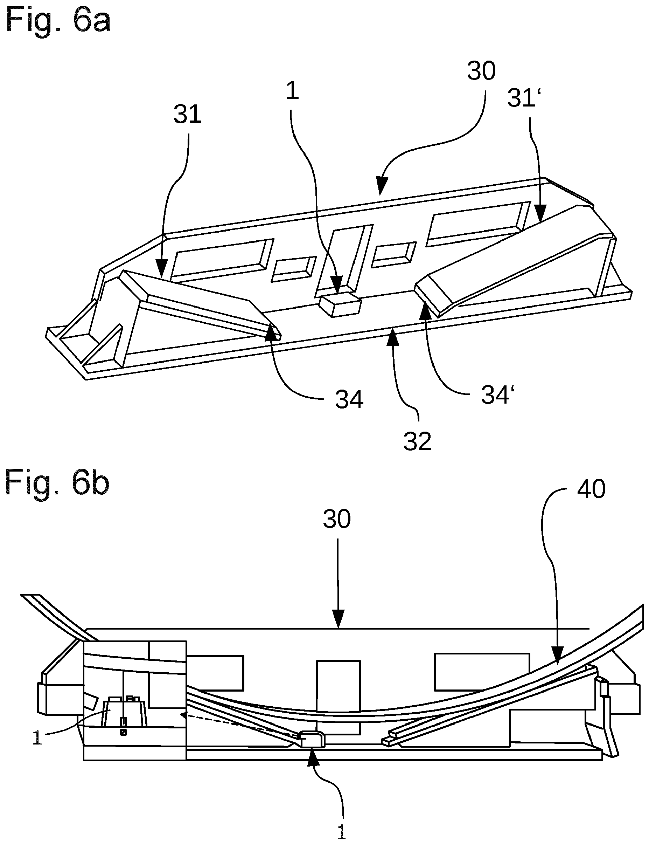

Figures 6a and 6b illustrate carrier equipment 30, which may be used for transporting wind turbine equipment 40, e.g. a blade, a nacelle, towers or parts of towers. The carrier equipment 30 comprises two support areas 31, 31', which are inclined downwards on the inside such that the wind turbine equipment 40 can rest on the support areas 31, 31' when installed in the carrier equipment 30. Ends 34, 34' of the support areas 31, 31' end on the inside on a ground plane 32. As shown in figure 6b, a tracking device 1 may be installed on the ground plane 32 between the two ends 34, 34' of the support areas 31, 31'.

A placement of the tracking device 1 between the two support areas 31, 31' has the advantage that the tracking device 1 is easily accessible for maintenance and installation. Importantly, such a placement allows for an easy replacement of the energy source used by the tracking device 1. Moreover, with such a placement, the reception of the position detection unit 10 is improved. In case the tracking device is located in a more protected location, elements of the carrier equipment 30 may hinder reception of satellite signals and/or reception and transmission of position data 20 using the communication unit 11. Thus, this placement also highlights the importance of a rugged case, i.e. protection from dust and water.

The tracking device 1 may be held in place using a magnetic connection for which the tracking device 1 may include a magnet. Alternatively, the tracking device can be glued to the ground plane 32 or held in place using screws.

At this point, it should be noted that all the parts described above are to be regarded individually - even without additional features described in the respective context, even if these have not been explicitly identified as optional features in the respective context, e.g. by using: in particular, preferably, for example, e.g., possibly, round brackets, etc. - and in combination or any sub-combination as independent embodiments or further developments of the invention as defined in particular in the introduction to the description and in the claims. - and in combination or any sub-combination are to be regarded as independent embodiments or further developments of the invention as defined in particular in the introduction to the description and in the claims. Deviations from this are possible. Specifically, it should be noted that the word "in particular" or round brackets do not indicate any features that are mandatory in the respective context.
- 1: Tracking device
- 2: case
- 3: battery compartment
- 4: Lid
- 5, 5': engagement tooth
- 6: o-ring seal
- 7: tooth recess
- 8: slit
- 9: display
- 10: position detection unit
- 11: communication unit
- 12: control unit
- 13: energy source
- 14: supercapacitor unit
- 20: position data
- 21, 24, 25: power
- 22: energy source control signal
- 23: super capacitor control signal
- 30: carrier equipment
- 31, 31': support area
- 32: ground plane
- 34, 34': end of support area
- 40: wind turbine equipment
- th: threshold
- t0, t1, t2: points in time

## Claims

1. A tracking device (1), in particular a portable tracking device, in particular for tracking carrier equipment, preferably of wind turbine equipment, such as blades, nacelles, towers or parts of towers, comprising:
- a position detection unit (10) adapted to provide position data (20) indicating a current position of the tracking device (1);
- a communication unit (11) adapted to communicate with a wireless communication network;
- a control unit (12) adapted to receive the position data (20) and adapted to send the position data (20) via the communication unit (11);
- an energy source (13) electrically coupled with the position detection unit (10) and the control unit (12);
**characterized in that**
the energy source (13) is removably arranged in the tracking device (1).

2. The tracking device (1) according to any of the preceding claims,
**characterized in that**
the energy source (13) is configured as a rechargeable battery, in particular as a lithium metal based battery or as a lithium ion accumulator.

3. The tracking device (1) according to any of the preceding claims,
**characterized by**
a dust and/or waterproof case (2), in particular rated according to IP61 to IP67, or IP68, wherein the position detection unit (10), the communication unit (11), the control unit (12), the energy source (13) and/or a supercapacitor unit (14) is/are arranged inside the case (2).

4. The tracking device (1) according to any of the preceding claims, in particular according to claim 3,
**characterized in that**
a/the case (2) comprises a battery compartment (3), wherein the battery compartment (3) includes a lid (4), wherein the lid (4) is configured to seal the battery compartment (3) when closed.

5. The tracking device (1) according to any of the preceding claims, in particular according to claim 4,
**characterized in that**
a/the battery compartment (3) comprises a thread, wherein a/the lid (4) is configured to seal the battery compartment (3) when screwed into the thread.

6. The tracking device (1) according to any of the preceding claims, in particular according to claim 5,
**characterized in that**
the lid (4) comprises a slit (8) or handle such that the lid (4) can be removed with or without at least one tool when attached to the battery compartment (3).

7. The tracking device (1) according to any of the preceding claims, in particular according to claim 4,
**characterized in that**
a/the battery compartment (3) is spring loaded and comprises a thread, wherein a/the lid (4) is adapted to be screwed into the thread such that an o-ring arranged at the lid (4) seals the battery compartment (3).

8. The tracking device according to any of the preceding claims, **characterized by**
a supercapacitor unit (14) adapted to power the communication unit (11), wherein the control unit (12) is adapted to route energy (24) from the energy source (13) to the supercapacitor (14) for charging the supercapacitor unit (14).

9. The tracking device (1) according to any of the preceding claims, in particular according to claim 8,
**characterized in that**
the control unit (12) is adapted to charge the supercapacitor unit (14) at predefined time intervals and/or to send position data (20) at predefined time intervals, preferably once per day, once per week, once per hour, once per minute and/or once per second.

10. The tracking device (1) according any of the preceding claims, in particular according to claim 9,
**characterized in that**
the control unit (12) is further adapted to receive configuration data, in particular via the communication unit (11) after charging the supercapacitor unit (14), wherein the control unit (12) is adapted to process the configuration data, wherein the configuration data determines a/the time interval to charge the supercapacitor unit (14) and/or to send position data (20).

11. The tracking device (1) according to any of the preceding claims, in particular according to claim 8,
**characterized in that**
the communication unit (11) is electrically coupled to the supercapacitor unit (14), wherein the supercapacitor unit (14) is adapted to provide energy (25) to the communication unit (11) only during sending of the position data (20) and/or during receiving of configuration data.

12. The tracking device (1) according to any of the preceding claims,
**characterized in that**
the control unit (12) is adapted to measure a voltage draw of the supercapacitor unit (14) during a charge period and further adapted to compare the voltage draw with a threshold value (th) to determine if the supercapacitor unit (14) is charged, wherein the supercapacitor unit (14) is determined to be charged if the voltage draw is lower and/or equal to the threshold value (th).

13. A system, comprising:
- At least one carrier equipment for the transport of wind turbine equipment;
- A tracking device (1), in particular according to any of the preceding claims, wherein the tracking device (1) is mounted on the at least one carrier equipment.

14. A method (30), in particular a computer-implemented method, for sending position data (20) by a tracking device (1), in particular a tracking device (1) according to any of the claims 1 to 12, the method comprising:
- Receiving (31) position data (20) indicating a current position of the tracking device (1);
- Charging (32) a/the supercapacitor unit (14) with electric energy (24);
- Sending (33) the position data (20) to a wireless communication network using a communication unit (11), wherein the communication unit (11) is powered by the supercapacitor unit (14).

15. A computer-readable medium storing instructions that when executed by at least one processor cause the at least one processor to implement a method according to claim 14.
